Europäisches Patentamt

(19) European Patent Office

Office européen des brevets

(11) Publication number: **0 106 788**
**A2**

(12) **EUROPEAN PATENT APPLICATION**

(21) Application number: **83630171.3**

(22) Date of filing: **17.10.83**

(51) Int. Cl.³: **B 60 C 9/20**

(30) Priority: **18.10.82 US 434797**

(43) Date of publication of application:
**25.04.84 Bulletin 84/17**

(84) Designated Contracting States:
**DE FR GB IT**

(71) Applicant: **THE GOODYEAR TIRE & RUBBER COMPANY**
**1144 East Market Street**
**Akron, Ohio 44316(US)**

(72) Inventor: **Gasowski, Chester Joseph**
**3624 Dogwood Street, Northwest**
**Uniontown Ohio 44685(US)**

(72) Inventor: **Loeffler, Ronald Lawrence**
**596 Malvern Road**
**Akron Ohio 44303(US)**

(72) Inventor: **Springford, Richard Herbert**
**578 Martinique Circle**
**Stow Ohio 44224(US)**

(72) Inventor: **Toth, Robert Leroy, Jr.**
**601 Taylor Avenue**
**Cuyahoga Falls Ohio 44221(US)**

(72) Inventor: **Musteric, Joseph Thomas**
**617 Crest Drive**
**Cumberland Maryland 21502(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) **Radial tires and a belt structure therefor.**

㊴ A radial ply (10) tire has a belt structure (16) with a pair of edge strips (19,10) of square woven fabric. A portion of each edge strip is disposed between a pair of belt plies (17,18) that are adjacent to one another, and the edge strips may be folded around the respective axial edges of the radially innermost belt ply (18).

FIG.1

Croydon Printing Company Ltd.

EP 0 106 788 A2

1

## RADIAL TIRES AND A BELT STRUCTURE THEREFOR

### Background of the Invention

The invention relates to a belt structure for a pneumatic tire, and more particularly to a belt structure having belt edge strips that are reinforced with square woven fabric.

As used in this disclosure and the appended claims with reference to a tire, the term "circumferential" should be understood as referring to the directions around the circumference of the tire. The terms "axial" and "axially" should be understood as referring to the directions parallel to the axis of revolution of the tire and perpendicular to the mid-circumferential plane of the tire. The "mid-circumferential plane" of the tire should be understood as referring to a plane perpendicular to the axis of revolution of the tire located midway between the sidewalls of the tire. The terms "radial" and "radially" should be understood as referring to the directions toward or away from the axis of revolution of the tire.

Reinforcing belt structures in tires are sometimes subject to a phenomenon known as "belt edge separation". Belt edge separation occurs when the axial edges of the belt plies become displaced from their preferred positions during operation of the tire and thus become separated from the underlying carcass-reinforcing ply, an adjacent belt ply, or overlying tread material. Various solutions have been suggested to eliminate belt edge separation. For example, U. S. Patent 4,184,530 teaches the use of cap plies or strips having cords from a synthetic material having a low modulus of elongation overlapping an edge region of a belt ply, with the cords extending in a circumferential direction only; U. S. Patent 3,598,165 teaches an elastomeric strip surrounding the belt edges with a fabric overlay on top of the strip; and U. S. Patent 4,062,393 teaches a body of rubber having a Shore A hardness of between 70 and 80 positioned to cover the belt edges.

There is provided in accordance with one aspect of the present invention a radial tire comprising a tread portion and an annular belt structure underlying said tread portion, said annular belt structure comprising a plurality of radially superposed belt plies and a pair of axially spaced apart edge strips of square woven fabric, a portion of each edge strip being disposed between a pair of belt plies that are adjacent to one another.

These and other features of the present invention can be better understood from the following detailed description of the preferred embodiments, when read in conjunction with the accompanying drawings.

Brief Description of the Drawings

Fig. 1 is a radial cross-sectional view of a tire having a belt structure according to a preferred embodiment of the invention; and

Figs. 2 and 3 are cross-sectional views of belt structures according to other preferred embodiments of the invention.

Detailed Description of the Invention

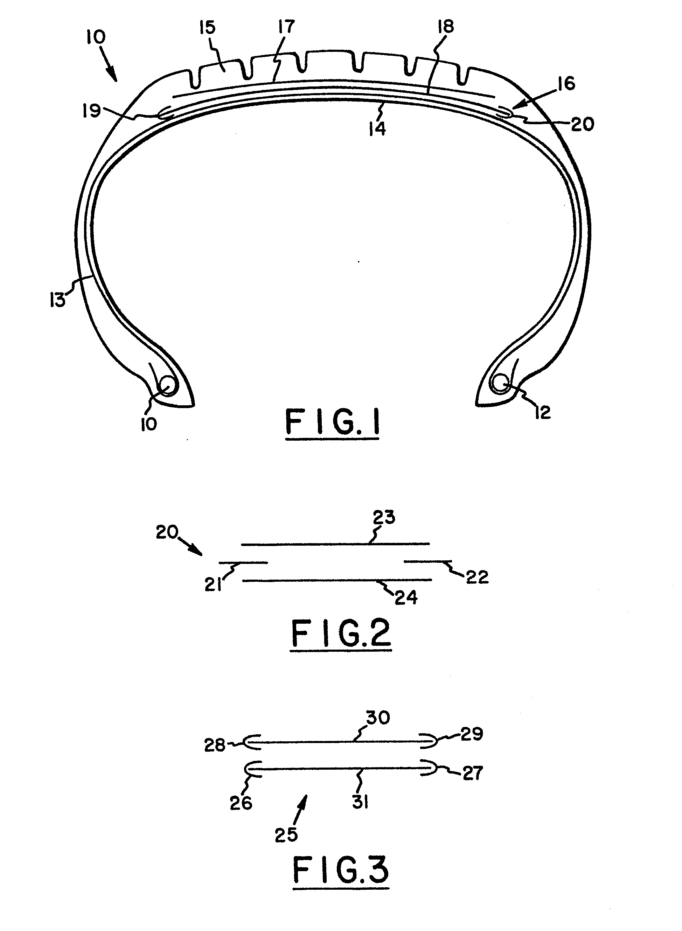

Referring first to Fig. 1, there is shown a radial cross-sectional view of a radial tire 10 manufactured in accordance with a preferred embodiment of the invention. The term "radial tire" should be understood as referring to a tire in which the reinforcing cords of the carcass-reinforcing ply are oriented at an angle of between about 75 to about 90 degrees with respect to the mid-circumferential plane of the tire. The radial tire 10 shown in Fig. 1 has an annular carcass including a pair of annular beads 11,12 and a carcass-reinforcing ply 13 extending from one bead to the other. The carcass has a radially outerlying crown portion 14. A tread portion 15 extends circumferentially about the crown portion 14 of the carcass.

An annular belt structure 16, underlies the tread portion of the radial tire, is disposed between the tread portion 15 and the crown portion 14 of the carcass. It is desirable that the crown portion of a tire carcass should have substantial rigidity or resistance to deformation in the circumferential and axial directions to improve the tread wear and handling characteristics of the tire. Because the reinforcing cords of the carcass-reinforcing ply of a radial tire do not substantially reinforce the crown region in a circumferential direction, radial tires are provided with belt plies. The annular belt structure is comprised of a plurality of radially superposed belt plies 17,18 of parallel reinforcing cords, such as steel, glass, or any other suitable material, embedded in an elastomeric substance, such as natural or syntheric rubber. As used herein, "plurality" means more than one. The reinforcing cords of the belt plies are oriented at a much lower angle, for example, between about 15 to about 35 degrees, with respect to the mid-circumferential plane of the tire than the reinforcing cords of the carcass-reinforcing ply. It is believed that the relative axial width of the belt plies will have no effect upon the practicing of the invention; in other words, it does not matter whether the belt plies all have the same axial width or different axial widths. The annular belt structure 16 is further comprised of a pair of axially spaced apart edge strips 19,20 of

4

square woven fabric with a portion, preferably substantially one-half of the axial width, of each edge strip being disposed between a pair of belt plies that are adjacent to one another. Depending upon the size of the tire, the edge strips preferably have axial widths of between about 15 to about 40 percent of the axial width of the widest belt ply of the annular belt structure.

The edge strips 19,20 are comprised of what is commonly referred to in the tire technology as square woven fabric. As used herein, and in the amended claims, "square woven fabric" refers to a plurality of textile cords that are interwoven or knit such that a first portion of the textile cords extend parallel to one another in a first direction while the remainder of the textile cords extend parallel to one another in a second direction that is substantially perpendicular to the first direction. As used herein, and in the amended claims, "interwoven" refers to fabric produced by interlacing two cords so that they cross each other at right angles, and "knit" refers to fabric produced by interlocking a series of loops of one or more cords. As used herein, and in the amended claims, "textile cords" refers to any fiber, filament or yarn of the type used for reinforcing tires. The textile cords of the square woven fabric used in practicing this invention are preferably nylon, (either type 6 or type 66), but may be polyester or any other suitable material selected in accordance with good engineering practice.

It is believed that if square woven fabric of the knit variety has been treated with a substance to enhance adhesion of the textile cords to rubber in a manner well known in the art, is used for the edge strips, then it should not be necessary to coat the edge strip with an elastomeric substance. However, the square woven fabric of the edge strips is preferably embedded in a sheet of an elastomeric substance by calendering, in a manner that is well known in the art, before cutting the material into strips of the desired size. It is preferable that a portion of the textile cords of the square woven fabric extend in a first direction that is substantially parallel to the respective axial edge of the belt plies, or in other words, in a direction that is substantially parallel to the mid-circumferential plane of the tire. Therefore, it is preferable that the textile cords of the square woven fabric in the edge strips extend in circumferential and axial directions rather than being oriented at various oblique angles with respect to the mid-circumferential plane of the tire. As used herein, the "mid-circumferential plane" of a tire is a plane that is perpendicular to the tire's axis of rotation and located midway between its sidewalls.

It is believed that a radial tire manufactured in accordance with this invention performs better on durability tests than prior art radial tires with respect to problems associated with belt edge separation such as fast shoulder wear and vibration disturbances. By "durability" is meant the useful life of a tire. The edge strips used in belt structures of radial tires made in accordance with this invention are believed to contribute to improved durability by keeping the edges of the belts at the diameter they have when the tire is newly vulcanized, adding stiffness to the belt edge regions, and preventing damage from being caused by the ends of steel cords at the cut edges of the belt plies.

It has been found that the edge strips may be satisfactorily manufactured using woven nylon 66 monofilament with a gauge of .011 inches (0.28 mm.) having 36 cords per inch (14.17 cords per cm.) in a first direction and 18 cords per inch (7.09 cords per cm.) in a second direction that is perpendicular to the first direction. In other words, substantially two-thirds of the total number of nylon cords, regardless of length or volume, in each edge strip extend in the first direction, while only one-third extend in the second direction. It is preferable that if the edge strips have more cords per unit of length in one direction than another, that the direction in which the cords per unit of length is higher should extend in the circumferential direction with respect to the tire, or in other words, substantially parallel to the mid-circumferential plane.

The radial tire 10 of Fig. 1 illustrates an embodiment of the invention wherein the annular belt structure 16 is comprised of only two belt plies, and each edge strip 19,10 is folded around a respective axial edge of the radially innermost belt ply 18. The invention may be practiced with annular belt structures comprising more than two belt plies (not shown) by having the pair of belt plies that the edge strips are disposed between being the two radially innermost belt plies of the annular belt structure. Each edge strip is then folded around a respective axial edge of the radially innermost belt ply of the pair of belt plies.

Fig. 2 is a cross-sectional view of a belt structure 20 made in accordance with another aspect of the invention wherein the portions of the edge strips 21,22 that are not disposed between the belt plies 23,24 that are adjacent to one another are not folded around the respective axial edges of a belt ply, but instead extend unfolded axially outwardly of the respective axial edges of the annular belt structure 20. In all other respects, the annular belt structure 20 is substantially the same as the annular belt structure illustrated in Fig. 1, and could be used in the radial tire shown in Fig.1.

Fig. 3 is a cross-sectional view of a belt structure 25 made in accordance with yet another aspect of the invention. This belt structure is substantially the same as the one shown in Fig. 1, with only two belt plies, except that in addition to having a first pair 26,27 of edge strips, it further comprises a second pair 28,29 of axially spaced apart edge strips of square woven fabric, each of which is folded around a respective axial edge of the radially outermost belt ply 30.

WHAT IS CLAIMED IS:

1. A radial tire comprising a tread portion and an annular belt structure underlying said tread portion, said annular belt structure comprising a plurality of radially superposed belt plies and a pair of axially spaced apart edge strips of square woven fabric, a portion of each edge strip being disposed between a pair of belt plies that are adjacent to one another.

2. A radial tire according to Claim 1, wherein said edge strips of square woven fabric comprise a plurality of textile cords, a portion of said textile cords extending in a direction that is substantially parallel to the mid-circumferential plane of said radial tire.

3. A radial tire according to Claim 1 or 2, wherein each edge strip has an axial width of between about 15 to about 40 percent of the axial width of the widest belt ply of said annular belt structure.

4. A radial tire according to Claim 1 or 2, wherein the portion of each edge strip that is disposed said belt plies is substantially one-half of the axial width of each edge strip.

5. A radial tire according to Claim 1 or 2, wherein said annular belt structure comprises only two belt plies and each edge strip is folded around a respective axial edge of the radially innermost of said belt plies.

6. A radial tire according to Claim 1 or 2, wherein said annular belt structure comprises more than two belt plies, the pair of belt plies that said edge strips are disposed between being the two radially innermost belt plies of said annular belt structure, and each edge strip is folded around a respective axial edge of the radially innermost belt ply of said pair of belt plies.

7. A radial tire according to Claim 5, wherein said annular belt structure further comprises a second pair of axially spaced apart woven edge strips of square woven fabric, a portion of each edge strip of said second pair being disposed between said belt plies, and each edge strip of said second pair being golded around a respective axial edge of the radially outermost of said belt plies.

FIG.1

FIG.2

FIG.3